# EUROPÄISCHE PATENTSCHRIFT

(11) **EP 1 160 037 B1**
(45) Veröffentlichungstag und Bekanntmachung des Hinweises auf die Patenterteilung: **06.09.2006**
(21) Anmeldenummer: 01113133.1
(22) Anmeldetag: 30.05.2001
(51) Int. Cl.: B23B 31/06

(54) **Werkzeugmaschine**
Machine tool
Machine-outil

(30) Priorität: 30.05.2000 DE 10026922
(43) Veröffentlichungstag der Anmeldung: 05.12.2001
(73) Patentinhaber: Donau-Werkzeugmaschinen GmbH, Ulm/Einsingen (DE)
(72) Erfinder: Schröpper, Martin, 89171 Illerkirchberg (DE)
(74) Vertreter: Munk, Ludwig

(56) Entgegenhaltungen:
- DD-A- 154 588
- DE-U- 8 120 656
- US-A- 2 590 629
- US-A- 2 618 180

## Beschreibung

Die Erfindung betrifft eine Werkzeugmaschine, insbesondere eine Bohrmaschine gemäß dem Oberbegriff des Anspruchs 1. Eine solche Bohrmaschine ist aus der DD 0 154 588 bekannt. Eine Werkzeugmaschine mit einer auf einem Spindelkopf aufgenommenen, mittels einer Vorschubeinrichtung in axialer Richtung bewegbaren Pinole, die mit einer axialen Bohrung versehen ist, in der eine sie durchgreifende, rotierbare Spindel gelagert ist, die an ihrem werkzeugseitigen Ende eine Konusausnehmung aufweist, in der ein ein Werkezug tragender Kegel reibschlüssig aufnehmbar ist, der zum Werkzeugwechsel mittels eines einen axialen Schlitz der Spindel in radialer Richtung durchgreifenden Austreiborgans austreibbar ist, ist bekannt.

Bei den bekannten Anordnungen dieser Art ist die Pinole ebenfalls mit einem Schlitz versehen, mit dem der Schlitz der Spindel zur Deckung gebracht werden kann, so dass sich ein schlitzförmiger Durchgangskanal ergibt. Zum Austreiben eines ein Werkzeug tragenden Kegels wird bisher ein sogenannter Austreibkeil benutzt, der in den genannten Durchgangskanal eingeführt und mittels eines Hammers eingetrieben wird. Nachteilig dabei ist, dass es sich bei den genannten Werkzeugen in Form von Austreibbkeil und Hammer um lose, maschinenfremde Teile handelt, die verlegt werden oder abhanden kommen können. Außerdem besteht die Gefahr, dass insbesondere bei nicht sachgemäßer Handhabung der genannten Werkzeuge Elemente der Maschine beschädigt oder Verletzungen des Bedienungspersonals verursacht werden können. Die bekannten Anordnungen erweisen sich demnach als bedienungsfreundlich und sicher genug.

Hiervon ausgehend ist es daher die Aufgabe der vorliegenden Erfindung, eine Anordnung eingangs erwähnter Art unter Vermeidung der geschilderten Nachteile mit einfachen und kostengünstigen Mitteln so zu verbessern, dass eine hohe Bedienungsfreundlichkeit und Sicherheit erreicht werden.

Diese Aufgabe wird erfindungsgemäß durch die Merkmale des Anspruchs 1 gelöst.

Diese Maßnahmen ergeben in vorteilhafter Weise eine maschineninterne Austreibeinrichtung. Zum Austreiben eines Werkzeugkegels aus der spindelseitigen Konusausnehmung werden daher in vorteilhafter Weise keine losen, maschinenfremden Teile benötigt, wodurch die Nachteile der bekannten Anordnungen beseitigt werden. Ein weiterer Vorteil der erfindungsgemäßen Maßnahmen ist aber auch darin zu sehen, dass die maschineninterne Austreibeinrichtung mittels der der Pinole zugeordneten Vorschubeinrichtung betätigbar ist. Es wird daher in vorteilhafter Weise keine eigene Antriebseinrichtung benötigt, was einen einfachen und kostengünstigen Aufbau ergibt. Mit den erfindungsgemäßen Maßnahmen wird die oben genannte Aufgabe daher auf höchst einfache und kostengünstige Weise gelöst.

Vorteilhafte Ausgestaltungen und zweckmäßige Fortbildungen der übergeordneten Maßnahmen sind in den Unteransprüchen angegeben. So kann ein in einer die Umfangsausnehmung der Pinole mit der Erweiterung der Pinolenbohrung verbindenden Bohrung angeordneter Drückerstift vorgesehen sein, der zum Eingriff mit dem Einrückschieber bringbar ist. Der Drückerstift ermöglicht die Überbrückung einer Distanz zwischen Bolzenträger und Einrückschieber, was eine günstige Positionierung des Einrückschiebers erlaubt.

Eine weitere zweckmäßige Maßnahme kann darin bestehen, dass dem Bolzenträger eine ihn übergreifende, mit Kippfreiheitsgrad in der Erweiterung der Pinolenbohrung angeordnete, die Spindel zumindest teilweise umfassende Wippe zugeordnet ist, die pinolenseitig abstützbar und bei eingerücktem Einrückschieber an den Bolzenträger anstellbar ist. Die Wippe ermöglicht in vorteilhafter Weise eine Hebelübersetzung der aufgebrachten Kraft und gewährleistet daher einen hohen Bedienungskomfort. Zweckmäßig kann die Wippe über den Drückerstift mit dem Einrückschieber in Wirkverbindung gebracht werden.

Mit Vorteil kann die dem Bolzenträger zugewandte Flanke der Wippe zwei gegeneinander geneigte, eine auf dem Bolzenträger abstützbare Kipp-Kante bildende Bereiche aufweisen. Eine zusätzliche Lagerung der Wippe ist dabei in vorteilhafter Weise nicht erforderlich, was den baulichen Aufwand vereinfacht.

Vorteilhaft kann der Wippe eine Rückstelleinrichtung zugeordnet sein, die einen den Bolzenträger mit Radialspiel umfassenden, zum Eingriff mit der Wippe bringbaren Übertragungsring aufweist, an dem eine an der Pinole abgestützte Federanordnung angreift. Durch die automatische Rückführung der Wippe ist sichergestellt, dass der Bolzenträger zuverlässig freigegeben wird, so dass das Einsetzen eines neuen Werkzeugs nicht behindert wird.

Eine weitere vorteilhafte Maßnahme kann darin bestehen, dass der Einrückschieber an seinem vorderen Ende mit einer vom Drückerstift abgewandten Keilfläche versehen ist und die Umfangsausnehmung an ihrem vom Drückerstift abgewandten Rand eine zur Keilfläche parallele Anlauffläche aufweist. Beim Anlaufen der Keilfläche an die Anlauffläche wird der Eirnückschieber entgegen der Einrückrichtung bewegt. Die genannten Maßnahmen stellen daher sicher, dass auch die Ausrückbewegung mittels des Pinolenvorschubs bewerkstelligt werden kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Vertikalschnitt durch den Spindelkopf einer erfindungsgemäßen Bohrmaschine und
- Figuren 2-4: markante Betriebsstellungen der Austreibeinrichtung der Anordnung gemäß Figur 1.

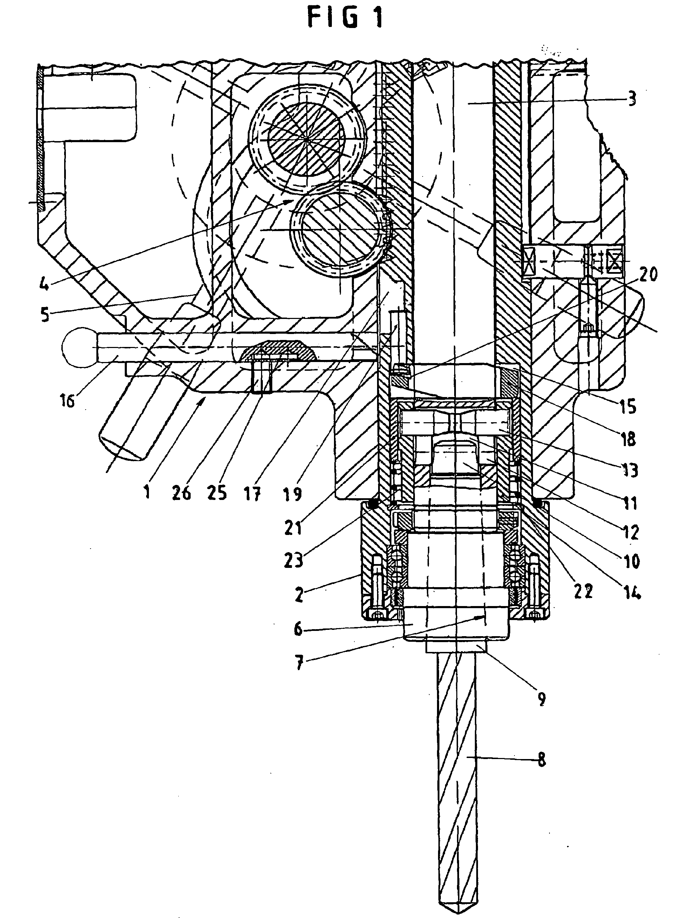

Die der Figur 1 zugrundeliegende Bohrmaschine enthält einen als Gussgehäuse ausgebildeten Spindelkopf 1, der im Falle einer sogenannten Schnellradialbohrmaschine an einem verschiebbar gelagerten, horizontal angeordneten Ausleger angebracht und mit diesem manuell verschiebbar ist. Der Spindelkopf 1 enthält eine mit stehender Achse angeordnete, mittels einer zugeordneten Vorschubeinrichtung in vertikaler Richtung verschiebbare, in Drehrichtung gesicherte Pinole 2. Diese ist mit einer axialen Durchgangsbohrung versehen, in der eine sie durchgreifende Spindel 3 drehbar gelagert ist, die mittels einer hier nicht näher dargestellten, mit ihrem aus der Pinole 2 nach oben herausragenden, oberen Endbereich zusammenwirkenden Antriebseinrichtung in Drehrichtung antreibbar ist. Zur Bildung der der Pinole 2 zugeordneten Vorschubeinrichtung ist die Pinole 2 mit einer Zahnstangenverzahnung versehen, die mit einem Rad eine Vorgeleges 4 zusammenwirkt, das mittels eines manuell betätigbaren Elements, hier in Form eines Sternrads 5, antreibbar ist.

Die Spindel 3 trägt an ihrem unteren Ende ein Bohrfutter 6, das mit einer konischen Bohrung 7 versehen ist, in der ein ein Werkzeug, hier in Form eines Bohrers 8, tragender Kegel 9 reibschlüssig aufnehmbar ist. Hierzu ist der Kegelwinkel kleiner als der Reibungskoefizient. Der Kegel 9 wird von Hand in die zugeordnete Konusbohrung 7 eingesetzt. Zum Austreiben des Kegels 9 zur Bewerkstelligung eines Werkzeugwechsels wird auf den Kegel 9 eine in Austreibrichtung richtende Kraft ausgeübt. Hierzu ist eine in die Pinole 2 eingebaute Austreibeinrichtung vorgesehen, die mittels der der Pinole 2 zugeordneten Vorschubeinrichtung betätigbar ist.

Der Kegel 9 ist an seinem oberen Ende mit einem laschenförmigen Austreibansatz 10 versehen. Dieser ragt in einen an das oberen Ende der Konusbohrung 7 sich anschließenden Aufnahmeraum 11 hinein. Im axialen Bereich des Aufnahmeraums 11 ist die Spindel 3 mit einem als durchgehendes Langloch ausgebildeten, axialen Schlitz 12 versehen. Dieser ist von einem als mit dem Austreibansatz 10 zum Eingriff bringbares Austreiborgan fungierenden Querbolzen 13 durchgriffen, der mit seinen Enden auf einem die Spindel 3 zumindest teilweise, hier ganz umfassenden, ringförmigen Bolzenträger 14 aufgenommen ist. Dieser ist mit axialem Verschiebefreiheitsgrad in einer stufenförmigen Erweiterung 15 der der Spindel 3 zugeordneten Pinolenbohrung angeordnet. Der mit der Spindel 3 sich drehende Bolzenträger 14 ist gegenüber der Spindel 3 in axialer Richtung verschiebbar angeordnet und besitzt gegenüber der in Drehrichtung blockierten Pinole 2 bzw. hiermit verbundenen Teilen ausreichend radiales Bewegungsspiel.

Der Bolzenträger 14 und mit diesem der Querbolzen 13 sind durch Verschieben der Pinole 2 mittels der dieser zugeordneten Vorschubeinrichtung in Austreibrichtung, das heißt nach unten, bewegbar. Hierzu ist der Spindelkopf 1 mit einem in einer zugeordneten Horizontalbohrung angeordneten Einrückschieber 16 versehen, der mit seinem inneren Endbereich in eine zugeordnete Umfangsausnehmung 17 der Pinole 2 einrückbar ist. Der Einrückschieber 16 ist gegenüber der in axialer Richtung verschiebbaren Pinole 2 stationär, so dass durch Verschieben der Pinole 2 mittels der dieser zugeordneten Vorschubeinrichtung eine Relativbewegung erzeugbar ist, die auf den Bolzenträger 14 und über diesen auf den Querbolzen 13 übertragbar ist. Dabei kann der Einrückschieber 16 in direkten oder indirekten Eingriff mit dem Bolzenträger 14 gebracht werden.

Im dargestellten Beispiel ist hierzu in der Erweiterung 15 der Pinolenbohrung oberhalb des Bolzenträgers 14 eine die Spindel 3 ebenfalls zumindest teilweise umfassende, hier ringförmige Wippe 18 vorgesehen, die mit dem Bolzenträger 14 in Austreibrichtung in Wirkverbindung bringbar ist. Der die Wippe 18 bildende Ring besitzt dabei innen gegenüber der Spindel 3 und außen gegenüber der Pinole 2 soviel Radialspiel, dass eine Kippbewegung um eine horizontale Kippachse möglich ist. Im dargestellten Beispiel ist die Wippe 18 mittels eines von ihr nach oben abgehenden, achsparallen Drückerstifts 19 kippbar und an den Bolzenträger 14 andrückbar. Der Drückerstift 19 befindet sich in einer die nach außen offene Umfangsausnehmung 17 der Pinole 2 mit der inneren Erweiterung 15 der Pinolenbohrung verbindenden, achsparallelen Bohrung des Pinolenmantels. Das obere Ende des Drückstifts 19 ragt in die Umfangsausnehmung 17 hinein. Das untere Ende des Drückerstifts 19 ist im Eingriff mit der Wippe 18. Hierzu kann die Wippe 18 mit einer einem am unteren Ende des Drückerstifts 19 vorgesehenen Schuh 29 zugeordneten Randausnehmung 20 versehen sein.

Der Wippe 18, die praktisch durch einen lediglich eingelegten Ring gebildet wird, ist eine Rückstelleinrichtung zugeordnet, welche die Wippe 18 automatisch in die der Figur 1 zugrundeliegende Ausgangsstellung zurückführt, sobald eine Beaufschlagung durch den Drückerstift 19 entfällt. Hierzu ist ein den mit der Spindel 3 sich drehenden in die Erweiterung 15 eingelegten Bolzenträger 14 mit ausreichend radialem Bewegungsspiel umfassender, ebenfalls in die Erweiterung 15 eingelegten Übertragungsring 21 vorgesehen, der von einer an einem pinolenseitig angebrachten Sprengring 22 abgestützten Feder 23 mit nach oben gerichteter Kraft beaufschlagt wird und an den äußeren Umfangsbereich der unteren Flanke des die Wippe 18 bildenden Rings angestellt wird. Der wie die Pinole 2 nicht rotierende Übertragungsring 21 besitzt innen gegenüber dem mit der Spindel 3 rotierenden Bolzenträger 14 radiales Spiel, so dass keine gegenseitige Berührung stattfindet. Dasselbe gilt für die den Bolzenträger 14 umfassende Feder 23. Der Außendurchmesser des gegenüber der Pinole 2 in axialer Richtung verstellbaren Übertragungsrings 21 kann dem Durchmesser der Erweiterung 15 der Pinolenbohrung entsprechen.

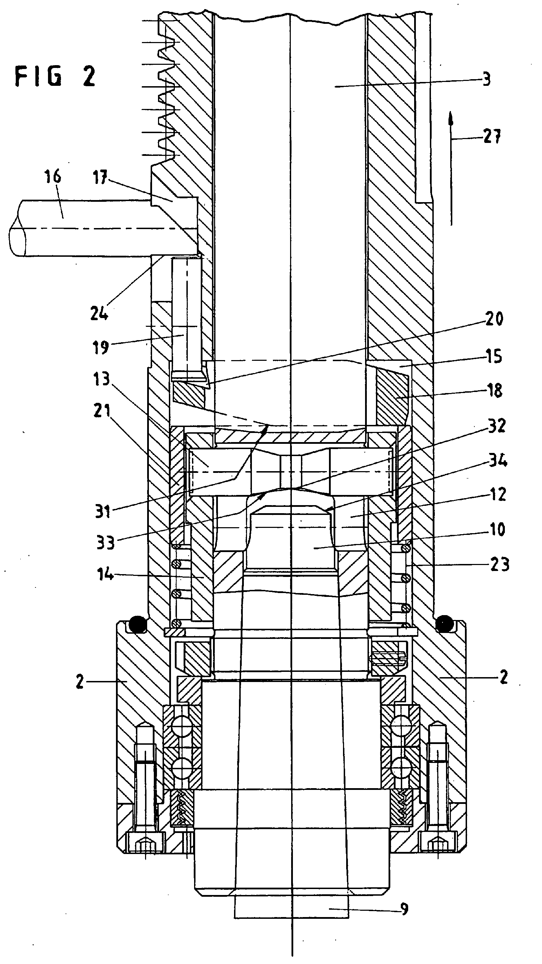

Zur Durchführung eines Austreibvorgangs wird die Pinole 2 durch Betätigung ihrer Vorschubeinrichtung so positioniert, dass der Einrückschieber 16, wie aus Figur 2 erkennbar ist, den Drückerstift 19 übergreifend in die Umfangsausnehmung 17 der Pinole 2 einrückbar ist. Der Einrückstift 16 ist zweckmäßig an seinem vorderen Ende mit einer unteren, planen Auflagefläche 24 versehen, die in eine flächige Anlage an der oberen Stirnseite des Drückerstifts 19 bringbar ist. Zur Drehsicherung des Einrückschiebers 16 kann, wie aus Figur 1 erkennbar ist, ein in eine Nut 25 eingreifender, spindelkopfseitig festgelegter Stift vorgesehen sein, der auch den Verschiebeweg begrenzt.

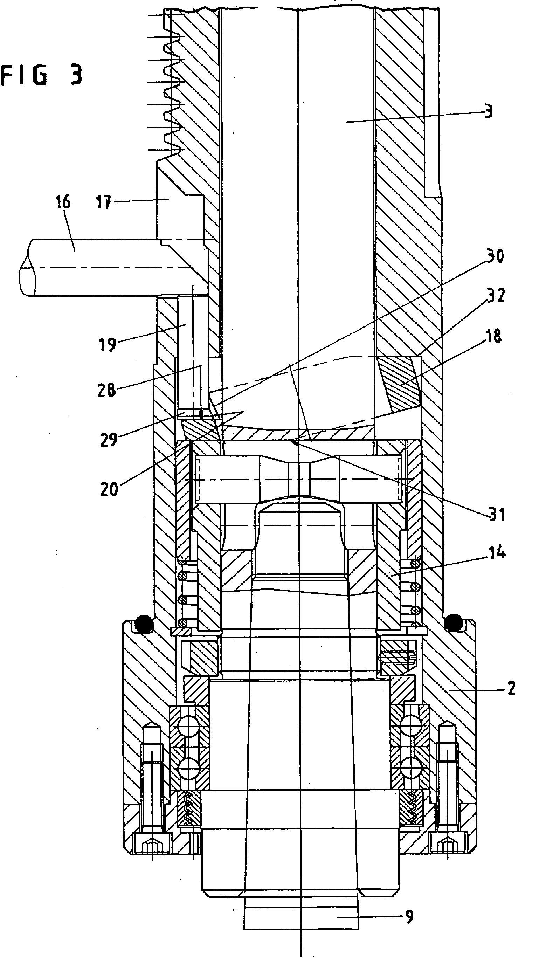

Nachdem der Einrückschieber 16 in die der Figur 2 zugrundeliegende Position eingerückt worden ist, wird die Pinole 2 mittels ihrer Vorschubeinrichtung leicht nach oben bewegt, wie in Figur 2 durch den Pfeil 27 angedeutet ist. Auf diese Weise ergibt sich eine Relativbewegung zwischen dem auf dem in Vertikalrichtung stationären Spindelkopf 1 aufgenommenen, in die Ausnehmung 17 der Pinole 2 eingerückten Einrückschieber 16 und der Pinole 2. Dabei kommt der Einrückschieber 16 zur Anlage am Drückerstift 19, wodurch dieser niedergedrückt wird, wie aus Figur 3 erkennbar ist. Der niedergedrückte Drückerstift 19 bringt die Wippe 18, wie Figur 3 weiter erkennen lässt, in eine Kippstellung, in welcher die Wippe 18 in Abstützanlage am darunter sich befindenden Bolzenträger 14 kommt und diesen mit einer nach unten gerichteten Kraft beaufschlagt.

Die dem Drückerstift 19 zugeordnete Randausnehmung 20 der Wippe 18 ist so ausgebildet, dass ihre untere Bodenfläche 28 bei gekippter Wippe, wie aus Figur 3 entnehmbar ist, etwa parallel zur unteren Aufstandsfläche des am unteren Ende des Drückerstifts 19 vorgesehenen Schuhs 29 ist, so dass sich eine flächige Anlage ergibt. Die innere Begrenzungswand 30 der Randausnehmung 20 ist so zum Drückerstift 19 hingeneigt, dass sie bei gekippter Wippe 18, wie Figur 3 weiter erkennen lässt, am Drückerstift 19 anläuft, wodurch sich eine Anschlagwirkung ergibt.

Die Unterseite der Wippe 18 enthält zwei unter einem Winkel gegeneinander geneigte Umfangsbereiche, von denen einer, hier der rechte Umfangsbereich, in der der Figur 2 zugrundeliegenden Ausgangsstellung und der andere, hier der linke Umfangsbereich, in der der Figur 3 zugrundeliegenden Kippstellung als Auflagefläche dienen. Die Kante zwischen diesen gegeneinander geneigten Bereichen bildet praktisch eine Kippkante 31, um die die Wippe 18 kippt, wie aus einem Vergleich der Figuren 2 und 3 ersichtlich ist.

In der der Figur 3 zugrundeliegenden Kippstellung läuft die Oberseite des vom Drückerstift 19 abgewandten Umfangsbereichs der Wippe 18 an der die Erweiterung 15 der Pinolenbohrung begrenzenden Schulter 32 an. Auf diese Weise ergibt sich eine Verstärkung der an der Kippkante 31 wirksamen, nach unten gerichteten Kraft und damit praktisch eine Übersetzung der durch Verstellen der Pinole 2 von außen eingeleiteten Kraft. Zweckmäßig ist der die Wippe 18 bildende Ring im Bereich seiner der Schulter 32 zugewandten Oberseite so abgeschrägt, dass sich in der Kippstellung eine flächige Anlage ergibt, wie aus Figur 3 erkennbar ist.

Der laschenförmige Ansatz 10 des Kegels 9 ist, wie beispielsweise Figur 2 anschaulich zeigt, im Bereich seiner oberen Ecken abgeschrägt. Der Querbolzen 13 ist mit einer mittigen Einkerbung 32 versehen, die seitliche Stützflächen 33 besitzt, mit denen der Querbolzen 13 an den seitlichen Eckabschrägungen 34 des Ansatzes 10 des Kegels 9 zur Anlage bringbar ist. Diese Eingriffsstellung liegt beispielsweise der Figur 3 zugrunde. Aufgrund der genannten Maßnahmen wird eine mittige Belastung des Querbolzens 13 vermieden. Die Stützkräfte werden näher am Bolzenträger 14 eingeleitet, wodurch eine Durchbiegung des Querbolzens 13 weitestgehend unterbleibt. Sobald der in Anlage am kegelseitigen Ansatz 10 gebrachte Querbolzen leicht weiter nach unten bewegt wird, wird der Reibschluss zwischen Kegel 9 und Konusbohrung 7 aufgehoben, so dass der Kegel 9 entnommen werden kann.

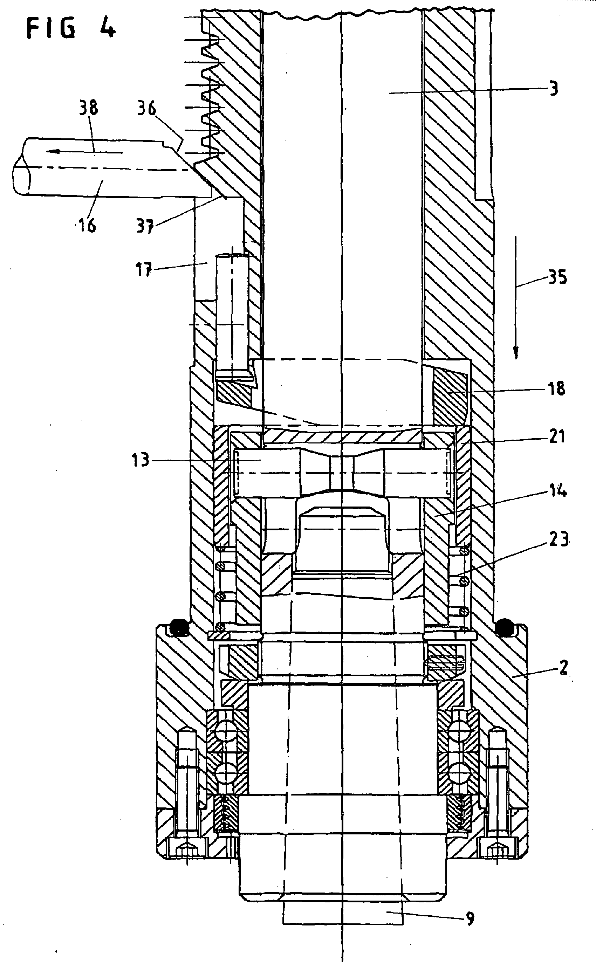

Um einen neuen Kegel 9 mit einem neuen Werkzeug einsetzen zu können, muss die Austreibeinrichtung von der der Figur 3 zugrundeliegenden Austreibstellung in die Ausgangsstellung zurückgesetzt werden. Hierzu wird zunächst die Pinole 2 nach unten bewegt, wie in Figur 4 durch den Pfeil 35 angedeutet ist. Dabei wird der Abstand zwischen Wippe 18 und Einrückschieber 16 vergrößert. Im selben Maße wird die Wippe 18 durch die durch den Übertragungsring 21 und die Feder 23 gebildete Rückstelleinrichtung in die der Figur 4 zugrundeliegende Ausgangsstellung zurückgekippt und vom den als Austreiborgan fungierenden Querbolzen 13 aufnehmenden Bolzenträger 14 abgehoben. Anschließend wird der Einrückschieber 16 in die der Figur 1 zugrundeliegende ausgerückte Stellung gebracht. Dies kann von Hand erfolgen. Im dargestellten Beispiel ist hierzu eine Ausrückeinrichtung vorgesehen.

Hierzu ist der Einrückschieber 16 an seinem vorderen Ende mit einer von seiner unteren Druckfläche 24 abgewandten, nach oben weisenden Keilfäche 36 versehen. Die Umfangsausnehmung 16 der Pinole 2 ist an ihrem oberen Rand mit einer zur Keilfläche 36 parallelen Anlauffläche 37 versehen. Diese läuft bei der Abwärtsbewegung der Pinole 2 auf die Keilfläche 36 des eingerückten Einrückschiebers 16 auf, wodurch die gemäß Pfeil 35 verlaufende, vertikale Bewegung der Pinole 32 in eine nach außen gerichtete, radiale Bewegung des Einrückstifts 16 umgesetzt wird, wie durch den Pfeil 38 angedeutet ist. Auf diese Weise wird der Einrückschieber 16 automatisch außer Eingriff mit der pinolenseitigen Randausnehmung 17 gebracht. Zweckmäßig besitzt der Einrückschieber 16 gegenüber der zugeordneten Bohrung des Spindelkopfes 1 eine gewisse Reibung, so dass keine selbsttätige Verstellung erfolgen kann.

Die Einrückbewegung des Einrückschiebers 16 wird manuell bewerkstelligt. Zur Erleichterung der Bedienung kann der Einrückschieber 16 an seinem äußeren Ende mit einem Handknopf versehen sein.

## Patentansprüche

1. Werkzeugmaschine, insbesondere Bohrmaschine, mit einer auf einem Spindelkopf (1) aufgenommenen, mittels einer Vorschubeinrichtung (4,5) in axialer Richtung bewegbaren Pinole (2), die mit einer axialen Bohrung versehen ist, in der eine sie durchgreifende, rotierbare Spindel (3) gelagert ist, die an ihrem werkzeugseitigen Ende eine Konusausnehmung (7) aufweist, in der ein ein Werkzeug (8) tragender Kegel (9) reibschlüssig aufnehmbar ist, der zum Werkzeugwechsel mittels eines einen axialen Schlitz (12) der Spindel (3) in radialer Richtung durchgreifenden Austreiborgans austreibbar ist, wobei das Austreiborgan als den Schlitz (12) der Spindel (3) durchgreifender Querbolzen (13) ausgebildet ist, der auf einem die Spindel (3) zumindest teilweise umfassenden, mit axialem Verschiebefreiheitsgrad in der Bohrung der Pinole (2) angeordneten Bolzenträger (14) aufgenommen ist, der durch Verschieben der Pinole (2) entgegen der Vorschubrichtung in Austreibrichtung verschiebbar ist, **dadurch gekennzeichnet, dass** der Bolzenträger (14) in einer Erweiterung (15) der Bohrung der Pinole (2) angeordnet und mittels eines auf dem Spindelkopf (1) aufgenommenen, in eine zugeordnete Umfangsausnehmung (17) der Pinole (2) in radialer Richtung einrückbaren Einrückschiebers (16) in Austreibrichtung verschiebbar ist.

2. Werkzeugmaschine nach Anspruch 1, **dadurch gekennzeichnet, dass** ein in einer die Umfangsausnehmung (17) der Pinole (2) mit der Erweiterung (15) der Pinolenbohrung verbindenden Bohrung des Pinolenmantels angeordneter Drückerstift (19) vorgesehen ist, der zum Eingriff mit dem Einrückschieber (16) bringbar ist.

3. Werkzeugmaschine nach einem der vorhergehenden Ansprüche, **dadurch gekennzeichnet, dass** dem Bolzenträger (14) eine ihn übergreifende, mit Kippfreiheitsgrad in der Erweiterung (15) der Pinolenbohrung angeordnete, die Spindel (3) zumindest teilweise umfassende Wippe (18) zugeordnet ist, die pinolenseitig abstützbar und bei eingerücktem Einrückschieber (16) an den Bolzenträger (14) anstellbar ist.

4. Werkzeugmaschine nach Anspruch 2 und 3, **dadurch gekennzeichnet, dass** die Wippe (18) über den Drückerstift (19) mit dem Einrückschieber (16) in Wirkverbindung bringbar ist.

5. Werkzeugmaschine nach Anspruch 4, **dadurch gekennzeichnet, dass** die Wippe (18) eine dem Drückerstift (19) zugeordnete Randausnehmung (20) aufweist, deren dem Drückerstift (19) zugewandte Bodenseite (28) bei an den Bolzenträger (14) angestellter Wippe (18) parallel zur zugewandten unteren Stirnfläche des Drückerstifts (19) ist.

6. Werkzeugmaschine nach Anspruch 5, **dadurch gekennzeichnet, dass** der Drückerstift (19) an seinem unteren Ende mit einem in die wippenseitige Randausnehmung (20) eingreifenden Schuh (29) versehen ist.

7. Werkzeugmaschine nach einem der vorhergehenden Ansprüche 3 bis 6, **dadurch gekennzeichnet, dass** die dem Bolzenträger (14) zugewandte Flanke der Wippe (18) zwei gegeneinander geneigte, eine am Bolzenträger zur Anlage bringbare Kippkante (31) bildende Bereiche aufweist.

8. Werkzeugmaschine nach einem der vorhergehenden Ansprüche 3 bis 7, **dadurch gekennzeichnet, dass** der an einer Schulter (32) der Pinolenbohrung abstützbare Bereich der Wippe (18) zur Bildung einer flächigen Anlage bei gekippter Wippe (18) abgeschrägt ist.

9. Werkzeugmaschine nach einem der vorhergehenden Ansprüche 5 bis 8, **dadurch gekennzeichnet, dass** die die Randausnehmung (20) der Wippe (18) radial begrenzende Wand (30) zum Drückerstift (19) hingeneigt ist und bei gekippter Wippe (18) mit ihrer druckflächenfernen Kante zur Anlage am Drückerstift (19) bringbar ist.

10. Werkzeugmaschine nach einem der vorhergehenden Ansprüche 3 bis 9, **dadurch gekennzeichnet, dass** der Wippe (18) eine eine an der Pinole (2) abgestützte Federanordnung (23) aufweisende Rückstelleinrichtung zugeordnet ist.

11. Werkzeugmaschine nach Anspruch 10, **dadurch gekennzeichnet, dass** die Rückstelleinrichtung einen den Bolzenträger (14) mit Radialspiel umfassenden, zum Eingriff mit der Wippe (18) bringbaren Übertragungsring (21) aufweist, an dem die Federanordnung (23) angreift.

12. Werkzeugmaschine nach einem der vorhergehenden Ansprüche, **dadurch gekennzeichnet, dass** der Einrückschieber (16) an seinem in die Umfangsausnehmung (17) der Pinole (2) einrückbaren Ende mit einer vom Bolzenträger (14) abgewandten Keilfläche (36) versehen ist und dass die Umfangsausnehmung (17) der Pinole (2) an ihrem vom Bolzenträger (14) abgewandten Rand eine zur Keilfäche (36) parallele Anlauffläche (37) aufweist.

13. Werkzeugmaschine nach Anspruch 12, **dadurch gekennzeichnet, dass** der Einrückschieber (16) mittels einer Stift-Schlitzanordnung (25,26) gegen Verdrehen gesichert ist.

14. Werkzeugmaschine nach einem der vorhergehenden Ansprüche, **dadurch gekennzeichnet, dass** der als Austreiborgan fungierende Querbolzen (13) mit einer mittleren Einkerbung (32) versehen ist, die seitliche Stützflächen (33) aufweist, die zum Eingriff mit seitlichen Randbereichen eines am inneren Ende des Kegels (9) vorgesehenen Austreibansatzes (10) bringbar sind.

## Claims

1. A machine tool, in particular a drilling machine comprising a spindle quill (2) which is accommodated on a spindle head (1) and axially movable by means of a feed arrangement (4, 5), such spindle quill (2) being provided with an axial bore in which a rotatable spindle (3) is held extending therethrough, which spindle (3) is provided on its tool side with a taper hole (7) which can accommodate a taper shank (9) holding a tool (8) in frictional engagement, which taper shank (9), for the purpose of tool change, is ejectable by means of an ejection element radially extending through an axial slot (12) of the spindle, with the ejection element being designed as a transverse pin (13) extending through the slot (12) of the spindle (3), such transverse pin (13) being accommodated on a pin carrier (14) with a degree of freedom for axial sliding movement, which at least partially encloses the spindle (3) and which is provided in the bore of the spindle quill (2), such pin carrier (14) being movable by moving the spindle quill (2) against the feed direction in an ejection direction, **characterised in that** the pin carrier (14) is provided in an extension (15) of the bore of the spindle quill (2) and is movable in the ejecting direction by means of an engaging member (16) which is accommodated on the spindle head (1) and which can be radially engaged in an associated circumferential recess (17) of the spindle quill (2).

2. A machine tool according to Claim 1, **characterised in that** provision is made for a pusher pin (19) mounted in the bore of the quill jacket connecting the circumferential recess (17) of the spindle quill (2) with the extension (15) of the quill bore, which pusher pin (19) can be moved into engagement with the engaging member (16).

3. A machine tool according to any of the preceding claims, **characterised in that** provision is made for a rocker (18) associated with the pin carrier (14), extending over the latter and with a tilting degree of freedom being provided in the extension (15) of the spindle quill bore, which rocker further encloses the spindle (3) at least partially and is supportable on the quill side and movable into contact with the pin carrier (14) when the engaging member (16) is in engaged position.

4. A machine tool according to the claims 2 and 3, **characterised in that** the rocker (18) can be moved into mechanical linkage with the engaging member (16) via the pusher pin (19).

5. A machine tool according to claim 4, **characterised in that** the rocker (18) is provided with a rim recess (20) associated with the pusher pin (19), the bottom side (28) of such rim recess, which faces the pusher pin (19), being disposed parallel to the facing lower end face of the pusher pin (19) when the rocker 18 is in contact with the pin carrier (14).

6. A machine tool according to claim 5, **characterised in that** the pusher pin (19) is provided at its lower end with a shoe (29) engaging the rocker-side rim recess (20).

7. A machine tool according to any of the preceding claims 3 to 6, **characterised in that** the flank of the rocker (18) facing the pin carrier (14) has two mutually inclined regions forming a tilting edge (31) which can be moved into contact with the pin carrier (14).

8. A machine tool according to any of the preceding claims 3 to 7, **characterised in that** the region of the rocker (18) which is supportable against a shoulder (32) of the spindle quill bore is slanted to ensure a full surface contact when the rocker (18) is tilted.

9. A machine tool according to any of the preceding claims 5 to 8, **characterised in that** the wall (30) radially limiting the rim recess (20) of the rocker (18) is inclined towards the pusher pin (19) and can with the edge away from the pressure surface be moved into contact with the pusher pin (19) when the rocker (18) is tilted.

10. A machine tool according to any of the preceding claims 3 to 9, **characterised in that** the rocker (18) is associated with a recuperating arrangement having a spring arrangement (23) supported on the spindle quill (2).

11. A machine tool according to claim 10, **characterised in that** the recuperating arrangement comprises a transmission ring (21) which encloses the pin carrier (14) with radial play and is engageable with the rocker (18), and on which the spring arrangement acts.

12. A machine tool according to any of the preceding claims, **characterised in that** the engaging member (16) is at its end which is engageable into the rim recess (17) of the spindle quill (2) provided with a wedge surface (36) on the side away from the pin carrier (14) and that the rim recess (17) of the spindle quill (2) is, at the rim away from the pin carrier (14), provided with a contact surface (37) parallel to the wedge surface.

13. A machine tool according to claim 12, **characterised in that** the engaging member (16) is secured against rotary movement by a pin / slot arrangement (25, 26).

14. A machine tool according to any of the preceding claims, **characterised in that** the transverse pin (13) acting as an ejection device is provided with a central notch (32) having lateral support surfaces (33) which can be moved into contact with lateral rim regions of an ejection shoulder (10) provided at the inner end of the taper shank (9).

## Revendications

1. Machine-outil, en particulier machine à percer, comprenant un fourreau de broche (2) qui est reçu sur une tête de broche (1), qui peut être déplacé dans la direction axiale par l'intermédiaire d'un dispositif d'avance (4, 5) et qui est pourvu d'un perçage axial dans lequel est logée une broche rotative (3) qui traverse ce dernier et qui, à son extrémité située du côté de l'outil, présente un évidement conique (7) dans lequel peut être reçu par friction un cône (9) qui porte un outil (8) et qui, pour le changement de l'outil, peut être expulsé au moyen d'un organe d'expulsion traversant une fente axiale (12) de ladite broche (3) dans la direction radiale, ledit organe d'expulsion étant réalisé comme boulon transversal (13) traversant la fente (12) de la broche (3), qui est reçu sur un support de boulon (14) embrassant ladite broche (3) au moins en partie et disposé avec un degré de liberté de déplacement axial dans le perçage dudit fourreau de broche (2), ledit support de boulon pouvant être déplacé dans la direction d'expulsion en déplaçant ledit fourreau de broche (2) à l'encontre de la direction d'avance, **caractérisée par le fait que** le support de boulon (14) est disposé dans un élargissement (15) du perçage du fourreau de broche (2) et peut être déplacé dans la direction d'expulsion au moyen d'un coulisseau à enclenchement (16) qui est reçu sur ladite tête de broche (1) et qui peut être enclenché dans le sens radial dans un évidement circonférentiel associé (17) du fourreau (2).

2. Machine-outil selon la revendication 1, **caractérisée par le fait que** l'on prévoit une tige-poussoir (19) qui est disposée dans un perçage de la surface latérale du fourreau de broche, ledit perçage reliant l'évidement circonférentiel (17) du fourreau de broche (2) à l'élargissement (15) du perçage du fourreau, et qui peut être mise en prise avec ledit coulisseau à enclenchement (16).

3. Machine-outil selon l'une des revendications précédentes, **caractérisée par le fait qu'**une bascule (18) est associée au support de boulon (14), qui s'étend sur ce dernier, est disposée avec un degré de liberté de basculement dans ledit élargissement (15) du perçage du fourreau et qui embrasse la broche (3) au moins en partie, ladite bascule pouvant être appuyée du côté du fourreau de broche et pouvant être mise en appui sur le support de boulon (14) lorsque ledit coulisseau à enclenchement (16) est enclenché.

4. Machine-outil selon la revendication 2 et 3, **caractérisée par le fait que** ladite bascule (18) peut être mise en communication active le coulisseau à enclenchement (16) par le biais de la tige-poussoir (19).

5. Machine-outil selon la revendication 4, **caractérisée par le fait que** ladite bascule (18) présente un évidement de bord (20) qui est associé à la tige-poussoir (19) et dont le côté de fond (28) montrant vers la tige-poussoir (19) s'étend parallèlement à la surface frontale inférieure opposée de la tige-poussoir (19) lorsque la bascule (18) se trouve en appui sur le support de boulon (14).

6. Machine-outil selon la revendication 5, **caractérisée par le fait que** la tige-poussoir (19) est pourvue à son extrémité inférieure d'un patin (29) qui s'engage dans ledit évidement de bord (20) de la bascule.

7. Machine-outil selon l'une des revendications précédentes 3 à 6, **caractérisée par le fait que** le flanc de la bascule (18) qui est tourné vers le support de boulon (14) présente deux zones inclinées l'une par rapport à l'autre qui forment une arête de basculement (31) laquelle peut être mise en appui sur le support de boulon.

8. Machine-outil selon l'une des revendications précédentes 3 à 7, **caractérisée par le fait que**, pour la réalisation d'un appui plan en état basculé de la bascule (18), la zone de la bascule (18), qui peut être appuyée sur un épaulement (32) du perçage du fourreau, est biseautée.

9. Machine-outil selon l'une des revendications précédentes 5 à 8, **caractérisée par le fait que** la paroi (30) qui limite radialement l'évidement de bord (20) de la bascule (18) est inclinée en direction de la tige-poussoir (19) et peut être mise en appui, avec son arête éloignée de la surface de pression, sur la tige-poussoir (19) lorsque la bascule (18) est basculée.

10. Machine-outil selon l'une des revendications précédentes 3 à 9, **caractérisée par le fait qu'**à ladite bascule (18) est associé un dispositif de rappel qui présente une disposition à au moins un ressort (23) appuyée sur le fourreau de broche (2).

11. Machine-outil selon la revendication 10, **caractérisée par le fait que** ledit dispositif de rappel présente un anneau de transmission (21) qui embrasse le support de boulon (14) avec un jeu radial et qui peut être mis en prise avec la bascule (18), la disposition à au moins un ressort (23) se prenant sur cet anneau de transmission.

12. Machine-outil selon l'une des revendications précédentes, **caractérisée par le fait que** le coulisseau à enclenchement (16) est pourvu, à son extrémité que l'on peut enclencher dans l'évidement circonférentiel (17) du fourreau de broche (2), d'une surface en forme de coin (36) montrant dans la direction opposée au support de boulon (14), et que ledit évidement circonférentiel (17) du fourreau de broche (2) présente, sur son bord montrant dans la direction opposée au support de boulon (14), une contre-surface (37) s'étendant parallèlement à ladite surface en coin (36).

13. Machine-outil selon la revendication 12, **caractérisée par le fait que** le coulisseau à enclenchement (16) est bloqué en rotation par le biais d'une disposition tige-fente (25, 26).

14. Machine-outil selon l'une des revendications précédentes, **caractérisée par le fait que** le boulon transversal (13) qui fait fonction d'organe d'expulsion est pourvu d'une encoche centrale (32) qui présente des surfaces latérales d'appui (33) lesquelles peuvent être mises en prise avec des zones marginales latérales d'une saillie d'expulsion (10) prévue à l'extrémité intérieure du cône (9).
